# FASCICULE DE BREVET EUROPEEN

(11) **EP 4 381 208 B1**
(45) Date de publication et mention de la délivrance du brevet: **12.11.2025**
(21) Numéro de dépôt: 22758242.6
(22) Date de dépôt: 03.08.2022
(51) Int. Cl.: F16H 61/32, F16H 63/30

(54) **ACTIONNEUR POUR L'ACTIONNEMENT D'AU MOINS UN ORGANE MOBILE D'UNE TRANSMISSION DE VÉHICULE**
AKTUATOR ZUR BETÄTIGUNG MINDESTENS EINES BEWEGLICHEN GLIEDS EINES FAHRZEUGANTRIEBSSTRANGS
ACTUATOR FOR ACTUATING AT LEAST ONE MOVABLE MEMBER OF A VEHICLE DRIVETRAIN

(30) Priorité: 06.08.2021 FR 2108566
(43) Date de publication de la demande: 12.06.2024
(73) Titulaire: Valeo Electrification, 95800 Cergy (FR)
(72) Inventeur: CASSARD, Quentin, 95892 CERGY PONTOISE (FR); RAUTUREAU, Fabrice, 95892 CERGY PONTOISE (FR); LEGRAND, Nicolas, 95892 CERGY PONTOISE (FR)
(86) Numéro de dépôt international: PCT/EP2022/071881
(87) Numéro de publication internationale: WO 2023/012246

(56) Documents cités:
- WO-A1-2014/082676
- CN-A- 107 654 638
- CN-A- 111 207 205
- DE-A1- 102019 218 825
- US-A1- 2019 107 197

## Description

L'invention concerne un actionneur pour l'actionnement d'au moins un organe mobile d'une transmission de véhicule, notamment un véhicule ayant au moins deux roues, par exemple une bicyclette aussi appelé vélo ou un triporteur aussi appelé tricycle.

L'invention trouve son application notamment dans le domaine des actionneurs pour le changement de rapports d'une transmission ou boite de vitesses à engrenages associé au véhicule. Une telle transmission ou boite de vitesses à engrenages est par exemple décrite dans le document WO 2012/156613 A1. De nombreuses autres applications sont cependant possibles.

Un tel actionneur trouve son utilité en étant couplé à la transmission ou boite de vitesses à engrenages du véhicule. Le véhicule peut être à assistance électrique, c'est-à-dire qu'il comprend un moteur d'entrainement électrique couplé à la transmission dudit véhicule. Le véhicule peut être également classique, c'est-à-dire sans assistance électrique.

Il existe un besoin de changer les rapports de la transmission du véhicule de manière automatique afin que la transmission fonctionne dans sa plage d'utilisation optimale sans occasionner un effort important de la part de l'utilisateur et/ou du moteur d'entrainement. L'actionneur selon l'invention simplifie ainsi l'utilisation du véhicule pour l'utilisateur qui n'a plus à se soucier d'être sur le bon rapport de la transmission.

Il est connu du document DE 10 2019 123 288 A1 un actionneur pour changer les rapports de la transmission d'un véhicule, notamment une bicyclette. L'actionneur décrit dans ce document a l'inconvénient d'être volumineux du fait d'un mécanisme complexe entre le moteur électrique et l'élément de sortie de l'actionneur couplé avec la transmission.

Les documents CN 107654638 A, DE 10 2019 218 825 A1 et WO 2014/082676 A1 divulguent également des actionneurs et constituent la base de la version en deux parties de la revendication 1.

La présente invention a pour objet une amélioration des solutions actuelles, notamment en proposant un actionneur compact et léger.

Plus particulièrement, l'invention concerne un actionneur pour l'actionnement d'au moins un organe mobile d'une transmission de véhicule, ledit actionneur comprend un moteur électrique ayant un arbre menant sur lequel est monté un premier pignon, une roue dentée ayant une denture engrenant avec le premier pignon et un élément de sortie de couple apte à être couplé avec la transmission, la roue dentée comprend en outre un mécanisme de vis sans fin engrenant avec un deuxième pignon monté sur un arbre mené, ledit arbre mené comprenant une cible magnétique faisant face à un capteur.

Ainsi, l'actionneur selon l'invention est particulièrement compact tout en intégrant un moyen de détection de la position angulaire de l'élément de sortie de couple, ce qui permet de connaitre la position exacte de l'organe mobile de la transmission associée.

Selon l'invention, le premier pignon et la denture de la roue dentée forment un engrenage face, également appelé engrenage frontal, connus sous la dénomination « face *gear* » en anglais. Ce type d'engrenage a la particularité d'être simple à mettre en œuvre car nécessite un positionnement précis seulement selon deux axes et permet un fonctionnement robuste. Par définition, un engrenage face ou frontal signifie l'association d'une roue dentée en forme de disque dont les dents sont taillées radialement sur une face avec un pignon droit dont l'axe est sensiblement perpendiculaire à l'axe de la roue dentée.

Selon une caractéristique de l'invention, la roue dentée comprend une première partie en forme de disque ayant une face interne et une face externe. Ladite denture est formée à la périphérie de la face externe. La roue dentée comprend en outre une deuxième partie en forme de fût s'étendant depuis la face externe de la première partie et sur laquelle se trouve l'élément de sortie de couple. Ladite première partie et deuxième partie de la roue dentée sont monobloc.

Selon une particularité de l'invention, le mécanisme de vis sans fin se trouve sur la deuxième partie en forme de fût de la roue dentée. En d'autres termes, le mécanisme de vis sans fin et l'élément de sortie de couple coïncident.

Selon une variante de réalisation de l'invention, le mécanisme de vis sans fin se trouve sur la première partie en forme de disque sur la face externe de la roue dentée.

Selon une caractéristique de l'invention, la cible est fixée à une première extrémité de l'arbre mené par l'intermédiaire d'un support de cible. Ledit arbre mené est guidé en rotation par un premier palier entourant le support de cible et par un deuxième palier entourant l'arbre mené à une deuxième extrémité de l'arbre mené.

Selon un mode de réalisation de l'invention, le deuxième pignon est situé sensiblement au milieu de l'arbre mené entre le premier et le deuxième palier.

Selon une autre caractéristique de l'invention, l'actionneur comprend un boîtier apte à être fixé sur la transmission du véhicule et dans lequel sont logés le moteur électrique, la roue dentée, l'arbre mené via ses paliers et le capteur. Le boîtier comprend en outre un connecteur électrique afin de connecter électriquement le moteur électrique et le capteur à une source électrique.

Selon un mode de réalisation de l'invention, le connecteur électrique est relié au moteur électrique et au capteur par l'intermédiaire de pistes conductrices surmoulées dans le boîtier.

Selon une caractéristique de l'invention, le moteur électrique, l'arbre mené et le capteur sont maintenus dans le boîtier par des moyens de fixations réalisés sous la forme de clips.

D'autres caractéristiques et avantages de l'invention ressortiront à la lecture qui suit d'exemples de réalisations détaillés, en référence aux figures annexées :
la [Figure 1] représente une vue en perspective du mécanisme de l'actionneur selon un premier mode de réalisation ;
la [Figure 2] représente une vue en coupe de l'arbre mené de l'actionneur sur lequel sont montés la cible et le deuxième pignon ;
la [Figure 3] représente le mécanisme de la figure 1 intégré dans un boîtier ;
la [Figure 4] représente une vue de dessus de l'actionneur de la figure 3, notamment focalisée sur la fixation de l'arbre mené dans le boîtier ;
la [Figure 5] et la [Figure 6] représentent une vue en coupe du moyen de fixation du moteur électrique ;
la [Figure 7] représente une vue en coupe de l'actionneur selon un axe passant par l'axe de rotation de la roue dentée et l'arbre menant du moteur électrique ;
la [Figure 8] représente une vue en perspective du mécanisme de l'actionneur selon un deuxième mode de réalisation.

Dans la suite de la description, les éléments identiques ou de fonction identique portent le même signe de référence. À fin de concision de la présente description, ces éléments ne sont pas décrits en détails dans chaque mode de réalisation et seules les différences entre les variantes de réalisation sont décrites en détails.

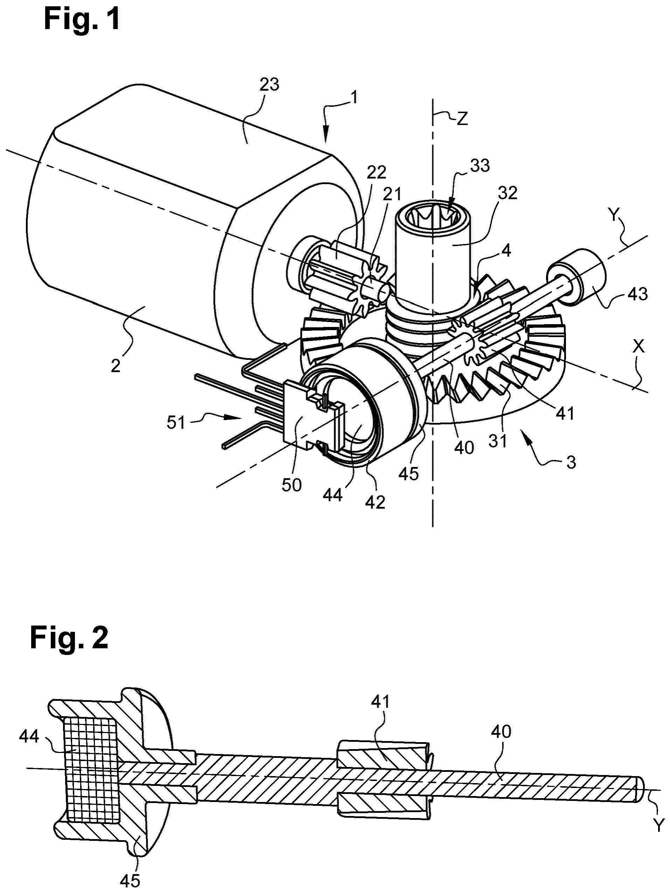

Sur la figure 1, on a illustré un repère X, Y, Z. La direction ou axe X correspond à une direction longitudinale. La direction ou axe Y, transversale, est définie comme étant perpendiculaire à la direction longitudinale X. Plus spécifiquement, les directions longitudinale et transversale X et Y peuvent par exemple appartenir sensiblement à un plan sensiblement horizontal. La direction ou axe Z correspond quant à elle à une direction verticale.

La Figure 1 représente le mécanisme interne de l'actionneur 1 selon un premier mode de l'invention. Le mécanisme est formé par un moteur électrique 2 à courant continu ayant un arbre menant 21 sur lequel est monté solidairement un premier pignon 22. Le premier pignon 22 peut être en plastique ou en métal. Pour des raisons de compacité, le moteur électrique 2 est un moteur plat, c'est-à-dire que la carcasse du moteur électrique 2 a deux méplats 23 qui réduisent son encombrement vertical. L'arbre 21 s'étend selon l'axe X.

Le premier pignon 22 qui est un pignon droit coopère avec une roue dentée 3. Dans l'exemple illustré, l'axe de rotation Z de la roue dentée 3 est non seulement perpendiculaire, mais aussi concourant avec l'axe X de l'arbre moteur 21 du moteur électrique 2. La roue dentée 3 présente une denture 31, dite axiale, qui est formée de dents d'engrenage ayant une extension pied-tête selon la direction de l'axe de rotation Z de la roue dentée, et qui s'engrène avec le pignon 22 du moteur électrique 2 afin de former un engrenage face ou frontal. La roue dentée 3 comprend une première partie en forme de disque avec une face interne et une face externe, lesdites faces étant perpendiculaire à l'axe Z. La première partie en forme de disque s'étend sensiblement selon un plan parallèle au plan défini par les directions longitudinale et transversale X et Y. La face interne est définie comme étant la face faisant face au boîtier 6 (non visible sur la figure 1). La face externe est définie comme étant la face opposée à la face interne. La denture 31 est formée à la périphérie de la face externe de la roue dentée 3. On comprend donc que la denture 31, prise dans sa globalité, s'étend selon un anneau autour de l'axe de rotation Z de la roue dentée 3. La denture 31 présente donc une largeur correspondant à l'étendue des dents de la denture 31 selon une direction radiale par rapport à l'axe de rotation Z. La roue dentée 3 comprend en outre une deuxième partie en forme de fût 32 qui s'étend verticalement depuis la face externe de la première partie et sur laquelle se trouve l'élément de sortie de couple 33. La deuxième partie en forme de fût 32 s'étend verticalement selon l'axe Z, c'est-à-dire que le fût 32 s'étend perpendiculairement par rapport à la première partie en forme de disque.

L'élément de sortie de couple 33 est ici un moyen de connexion sous la forme d'un embout étoilé femelle dans lequel vient s'emmancher un organe de la transmission par exemple un arbre de transmission sur lequel se déplace linéairement une navette permettant de sélectionner un rapport de transmission. En variante non représentée, l'élément de sortie de couple 33 peut être un embout étoilé mâle. Tout autre moyen permettant de transmettre un couple peut être envisagé pour réaliser l'élément de sortie de couple 33.

La première partie et la deuxième partie de la roue dentée 3 sont monobloc, c'est-à-dire que la roue dentée 3 est réalisée dans un seul matériau, par exemple en plastique, plus précisément en polyoxyméthylène. Le couple de rotation fourni par le moteur électrique passe ainsi par le premier pignon 22, puis par la roue dentée 3 et est transmis à l'organe mobile de la transmission (non représenté) par l'intermédiaire de l'élément de sortie de couple 33.

Afin de connaître de manière précise la position de l'organe mobile de la transmission et ainsi le rapport engagé, il est nécessaire de connaitre la position angulaire de la roue dentée 3. Pour des raisons de compacité verticale de l'actionneur 1, il est impossible de positionner un aimant et un capteur selon l'axe Z, il faut alors déporter l'aimant et le capteur dans une autre direction qui n'impacte pas la compacité de l'actionneur selon l'axe Z.

Pour ce faire, la roue dentée 3 comprend un mécanisme de vis sans fin 4 qui engrène avec un deuxième pignon 41 monté sur un arbre mené 40. Le mécanisme de vis sans fin est un filetage. Dans le mode de réalisation de la figure 1, le mécanisme de vis sans fin 4 se trouve sur la deuxième partie en forme de fût 32 de la roue dentée 3. Le mécanisme de vis sans fin 4 est situé sur le fût 32 à proximité de la première partie de la roue dentée 3. Le rapport de réduction du mécanisme de vis sans fin 4 est déterminé de manière à ce que pour un nombre de tour déterminé de la roue dentée 3, l'arbre 40 n'effectue qu'un seul tour.

Dans le cas présent, le rapport de réduction est tel que la roue dentée 3 effectue onze tours soit 3960° pendant que l'arbre 40 effectue un tour soit 360°. Les onze tours de la roue dentée 3 correspondent au déplacement de l'organe mobile de la transmission entre ses deux positions extrêmes permettant de couvrir tous les changements de rapports de la transmission. Le nombre de dent du deuxième pignon 41 est identique au nombre de tours nécessaire à la roue dentée 3 pour déplacer l'organe mobile de la transmission entre ses deux positions extrêmes plus une garde d'une dent qui correspond à un tour supplémentaire. Dans le cas présent, le pignon 41 a onze dents ce qui correspond aux onze tours de la roue dentée 3.

L'arbre 40 va maintenant être décrit en référence aux figures 1 et 2. L'arbre 40 s'étend selon l'axe Y et se compose d'un arbre en métal sur lequel est monté le deuxième pignon 41 qui coopère avec le mécanisme de vis sans fin 4 de la roue dentée 3. En variante, l'arbre 40 peut être en plastique. Le deuxième pignon 41 peut être en plastique ou en métal. Une cible 44 faisant face à un capteur 50 est fixée à une première extrémité de l'arbre 40 par l'intermédiaire d'un support de cible 45.

La cible 44 est ici un une cible magnétique, c'est-à-dire que la cible 44 est un aimant permanent. La cible 44 génère ainsi un champ magnétique destiné à influer sur le capteur magnétique 50 qui est notamment une sonde à effet Hall. Il est ainsi possible en fonction du signal émis par le capteur 50 de déterminer la position exacte de l'organe mobile de la transmission entre ses deux positions extrêmes.

La cible 44 est de forme cylindrique et est centrée sur l'axe Y. La cible 44 est montée et maintenue dans le support de cible 45 par un moyen de fixation, par exemple par collage ou par surmoulage. Le support de cible 45 est une pièce sensiblement cylindrique réalisée en plastique, notamment en polyoxyméthylène et est relié à l'arbre 40. Par exemple, le support de cible 45 est emmanché et collé sur l'arbre 40. En variante, le support de cible 45 et l'arbre sont monobloc. La surface interne du support de cible 45 reçoit la cible 44 et la surface externe du support de cible 45 reçoit un premier palier 42 de guidage de l'arbre 40.

L'arbre 40 est guidé en rotation par le premier palier 42 entourant le support de cible 45 et par un deuxième palier 43 entourant l'arbre 40 à une deuxième extrémité de l'arbre 40. Les paliers 42, 43 sont des paliers en bronze ou en laiton. En variante, les paliers 42, 43 peuvent être en plastique, par exemple en polyétheréthercétone. Les paliers 42, 43 ont des diamètres différents. Le premier palier 42 entourant le support de cible 45 a un diamètre plus grand que le deuxième palier 43. Le deuxième pignon 41 est situé sensiblement au milieu de l'arbre 40 entre le premier palier 42 et le deuxième palier 43.

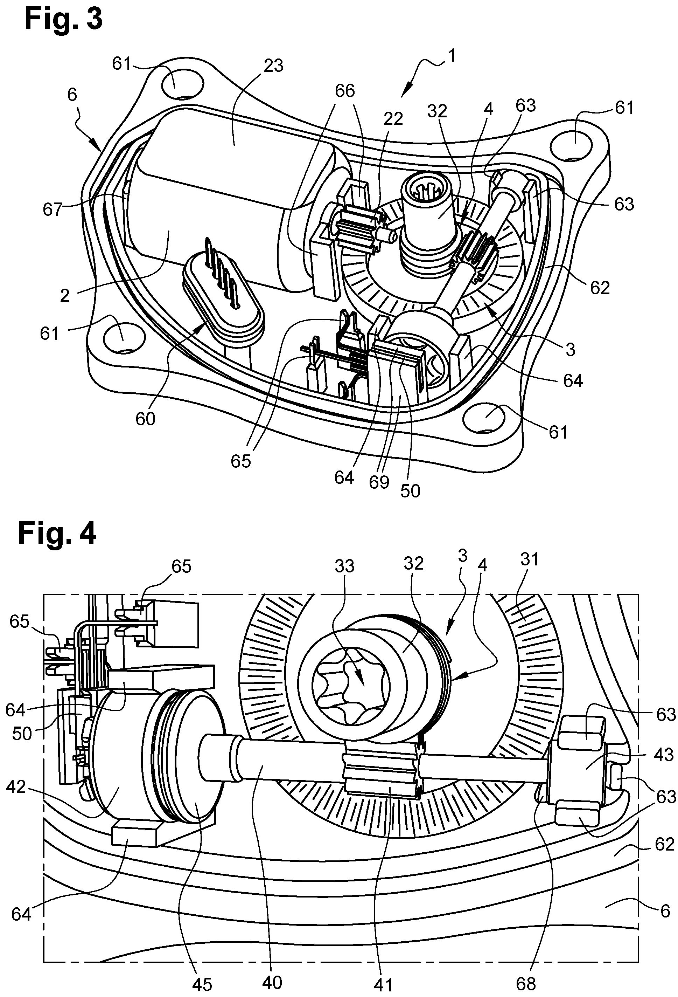

La figure 3 montre le mécanisme de la figure 1 intégré dans un boîtier 6. Le boîtier 6 est apte à être fixé sur la transmission du véhicule notamment par l'intermédiaire de moyens de fixations, par exemple des vis, passant au travers de plusieurs ouvertures 61 ménagées à la périphérie du boîtier 6. Un joint est disposé dans une gorge 62 périphérique du boîtier 6 afin d'assurer une étanchéité entre le boîtier 6 de l'actionneur 1 et la transmission. Le joint est par exemple réalisé en EPDM ou FKM ou silicone. Le boîtier est par exemple réalisé en plastique, notamment en plastique renforcé en fibre de verre.

Le boîtier 6 loge le moteur électrique 2, la roue dentée 3, l'arbre 40, et le capteur 50 en son volume interne. Le boîtier 6 comprend en outre un connecteur électrique 60 afin de connecter électriquement le moteur électrique 2 et le capteur 50 à une source électrique. Le connecteur électrique 60 permet également de récupérer le signal émis par le capteur 50. Le connecteur électrique 60 est relié au moteur électrique 2 et au capteur 50 par l'intermédiaire de pistes conductrices surmoulées dans le boîtier 6. Le connecteur 60 est étanche et intègre un joint.

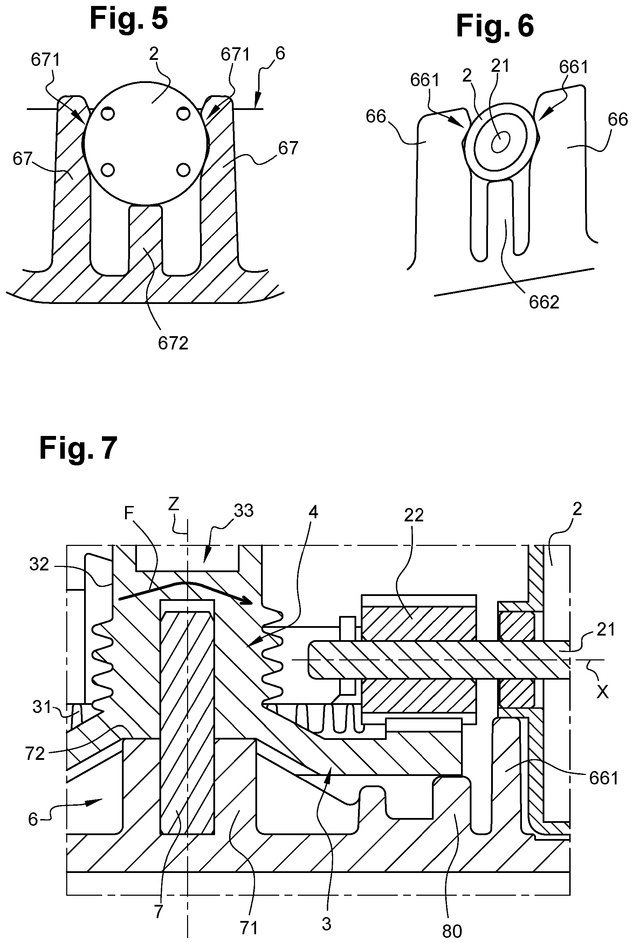

Le moteur électrique 2, l'arbre 40 et le capteur 50 sont maintenus dans le boîtier 6 par des moyens de fixation réalisés sous la forme de clips. Les figures 3, 5 et 6 illustrent ces moyens de fixation. La figure 5 montre la partie arrière du moteur électrique 2 fixée au boîtier 6 par deux clips 671 formés par deux excroissances 67 du boîtier 6 et par une butée 672. La butée 672 sert de mise en position sur le boîtier 6 et les deux clips 671 servent de maintien en position du moteur électrique 2 dans le boîtier 6.

Le même principe est utilisé pour fixer la partie avant du moteur électrique comme illustré sur la figure 6. La partie avant du moteur électrique 2 est fixé au boîtier 6 par deux clips 661 formés par deux excroissances 66 du boîtier 6 et par une butée 662. La butée 662 sert de mise en position sur le boîtier 6 et les deux clips 661 servent de maintien en position du moteur électrique 2 dans le boîtier 6.

En référence aux figures 3 et 4, l'arbre 40 est également fixé au boîtier 6 par des moyens de fixations réalisés sous la forme de clips. Le premier palier 42 est fixé au boîtier 6 par deux clips 64 formés par deux excroissances du boîtier 6. Le deuxième palier 43 est fixé au boîtier 6 par trois clips 63 formés par trois excroissances du boîtier 6. Afin de bloquer la translation de l'arbre 40 selon la direction Y, un pion 68 est formé par une excroissance du boîtier 6. En alternative au pion 68, le blocage de l'arbre 40 selon la direction Y peut être réalisé par une excroissance d'un des clips 63 en direction de l'arbre 40.

Le capteur 50 est également fixé au boîtier 6 par des moyens de fixations réalisés sous la forme de clips, le capteur 50 est notamment positionné entre deux parois 69. Les connections électriques du capteur 50 sont reliées aux pistes conductrices surmoulées du boîtier 6 par des broches de connexion 65.

La figure 7 montre le guidage en rotation de la roue dentée 3 dans le boîtier 6 par l'intermédiaire d'un arbre 7. L'arbre 7 est inséré dans un fût de guidage 71 du boîtier 6. L'arbre 7 peut être emmanché collé dans le fût 71 ou être surmoulé dans le fût 71. La roue dentée 3 vient en butée contre une extrémité 72 de ce fût de guidage 71 afin d'être bloqué en translation selon l'axe Z. Lors du fonctionnement de l'actionneur 1, il se peut que la roue dentée 3 rotule du fait de l'angle de pression de l'engrenage face entre le premier pignon 22 et la denture 31 ce qui tend à faire basculer la roue dentée dans une direction selon la flèche F. Pour contrer ce désagrément, un pion 80 est disposé dans le boîtier 6 au regard de la face interne de la première partie de la roue dentée 3 au niveau de la denture 31. Le pion 80 fait saillie en direction de la roue dentée 3 et du premier pignon 22. En d'autres termes, le pion 80 fait saillie au droit du premier pignon 22 depuis le boîtier 6 et la roue dentée 3 se trouve entre le pion 80 et le premier pignon dans la direction de l'extension du pion 80. Le pion 80 s'étend dans une direction parallèle à la direction Z. Le pion 80 est cylindrique. Un jeu compris entre 0,1mm et 1mm est défini entre le pion 80 et la roue dentée 3.

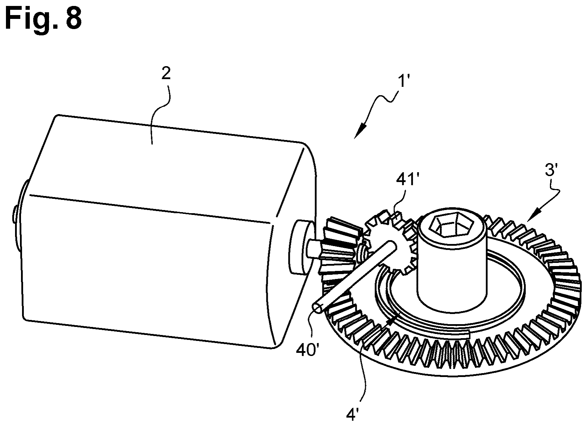

La Figure 8 illustre un actionneur 1' selon un second mode de réalisation de l'invention. A la différence du premier mode de réalisation, le mécanisme de vis sans fin 4' de l'actionneur 1' se trouve sur la première partie en forme de disque sur la face externe de la roue dentée 3'. Le mécanisme de vis sans fin 4' forme ainsi un chemin de came en forme de spirale. Le fonctionnement est identique au premier mode de réalisation, c'est-à-dire que le rapport de réduction du mécanisme de vis sans fin 4' est déterminé de manière à ce que pour un nombre de tour déterminé de la roue dentée 3', l'arbre 40' n'effectue qu'un seul tour.

Dans les revendications, tout signe de référence entre parenthèses ne saurait être interprété comme une limitation de la revendication.

## Revendications

1. Actionneur (1, 1') pour l'actionnement d'au moins un organe mobile d'une transmission de véhicule, ledit actionneur (1, 1') comprend un moteur électrique (2) ayant un arbre menant (21) sur lequel est monté un premier pignon (22, 22'), une roue dentée (3, 3') ayant une denture (31, 31') engrenant avec le premier pignon (22, 22') et un élément de sortie de couple (33) apte à être couplé avec la transmission, la roue dentée (3, 3') comprend en outre un mécanisme de vis sans fin (4, 4') engrenant avec un deuxième pignon (41, 41') monté sur un arbre mené (40), ledit arbre mené (40) comprenant une cible magnétique (44) faisant face à un capteur (50), **caractérisé en ce que** le premier pignon (22, 22') et la denture (31, 31') de la roue dentée (3, 3') forment un engrenage face, également appelé engrenage frontal.

2. Actionneur selon la revendication 1, **caractérisé en ce que** la roue dentée (3, 3') comprend une première partie en forme de disque avec une face interne et une face externe, ladite denture (31, 31') est formée à la périphérie de la face externe, la roue dentée (3, 3') comprend en outre une deuxième partie en forme de fût (32) s'étendant depuis la face externe de la première partie et sur laquelle se trouve l'élément de sortie de couple (33), ladite première partie et deuxième partie sont monobloc.

3. Actionneur selon la revendication 2, **caractérisé en ce que** le mécanisme de vis sans fin (4) se trouve sur la deuxième partie en forme de fût (32) de la roue dentée (3).

4. Actionneur selon la revendication 2, **caractérisé en ce que** le mécanisme de vis sans fin (4') se trouve sur la première partie en forme de disque sur la face externe de la roue dentée (3).

5. Actionneur selon l'une des revendications précédentes, **caractérisé en ce que** la cible (44) est fixée à une première extrémité de l'arbre mené (40) par l'intermédiaire d'un support de cible (45), ledit arbre mené (40) étant guidé en rotation par un premier palier (42) entourant le support de cible (45) et par un deuxième palier (43) entourant l'arbre mené (40) à une deuxième extrémité de l'arbre mené (40).

6. Actionneur selon la revendication 5, **caractérisé en ce que** le deuxième pignon (41) est situé sensiblement au milieu de l'arbre mené (40) entre le premier et le deuxième palier (42, 43).

7. Actionneur selon l'une des revendications précédentes, **caractérisé en ce qu'**il comprend un boîtier (6) apte à être fixé sur la transmission du véhicule et dans lequel sont logés le moteur électrique (2), la roue dentée (3, 3'), l'arbre mené (40) et le capteur (50), ledit boîtier (6) comprend en outre un connecteur électrique (60) afin de connecter électriquement le moteur électrique (2) et le capteur (50) à une source électrique.

8. Actionneur selon la revendication 7, **caractérisé en ce que** le connecteur électrique (60) est relié au moteur électrique (2) et au capteur (50) par l'intermédiaire de pistes conductrices surmoulées dans le boîtier (6).

9. Actionneur selon la revendication 7 ou 8, **caractérisé en ce que** le moteur électrique (2), l'arbre mené (40) et le capteur (50) sont maintenus dans le boîtier (6) par des moyens de fixations (66, 67, 63, 64) réalisés sous la forme de clips.

## Patentansprüche

1. Aktuator (1, 1') zum Betätigen mindestens eines beweglichen Elements eines Fahrzeuggetriebes, wobei der Stellantrieb (1, 1') einen Elektromotor (2) mit einer Antriebswelle (21) umfasst, auf der ein erstes Zahnrad (22, 22') montiert ist, ein Zahnrad (3, 3') mit einer Verzahnung (31, 31'), die mit dem ersten Zahnrad (22, 22') kämmt, und ein Drehmomentausgangselement (33) umfasst, das mit dem Getriebe gekoppelt werden kann, wobei das Zahnrad (3, 3') außerdem einen Schneckenmechanismus (4, 4') aufweist, der mit einem zweiten Zahnrad (41, 41') kämmt, das auf einer Abtriebswelle (40) montiert ist, wobei die angetriebene Welle (40) ein Magnetziel (44) umfasst, das einem Sensor (50) gegenüberliegt, **dadurch gekennzeichnet, dass** das erste Zahnrad (22, 22') und die Verzahnung (31, 31') des Zahnrades (3, 3') ein Kronenradgetriebe bilden, das auch als Frontalgetriebe bezeichnet wird.

2. Aktuator nach Anspruch 1, **dadurch gekennzeichnet, dass** das Zahnrad (3, 3') einen ersten scheibenförmigen Teil mit einer Innenseite und einer Außenseite umfasst, wobei die Verzahnung (31, 31') am Umfang der Außenseite ausgebildet ist, wobei das Zahnrad (3, 3') außerdem einen zweiten tonnenförmigen Teil (32) aufweist, der sich von der Außenseite des ersten Teils aus erstreckt und auf dem sich das Drehmomentausgangselement (33) befindet, wobei der erste Teil und der zweite Teil einstückig sind.

3. Aktuator nach Anspruch 2, **dadurch gekennzeichnet, dass** sich der Schneckenmechanismus (4) auf dem zweiten tonnenförmigen Teil (32) des Zahnrads (3) befindet.

4. Aktuator nach Anspruch 2, **dadurch gekennzeichnet, dass** sich der Schneckenmechanismus (4') auf dem ersten scheibenförmigen Teil an der Außenseite des Zahnrads (3) befindet.

5. Aktuator nach einem der vorstehenden Ansprüche, **dadurch gekennzeichnet, dass** das Ziel (44) über eine Zielhalterung (45) an einem ersten Ende der Abtriebswelle (40) befestigt ist, wobei die angetriebene Welle (40) durch ein erstes Lager (42), das die Zielhalterung (45) umgibt, und durch ein zweites Lager (43), das die angetriebene Welle (40) an einem zweiten Ende der angetriebenen Welle (40) umgibt, drehbar geführt ist.

6. Aktuator nach Anspruch 5, **dadurch gekennzeichnet, dass** das zweite Zahnrad (41) im Wesentlichen in der Mitte der Abtriebswelle (40) zwischen dem ersten und dem zweiten Lager (42, 43) angeordnet ist.

7. Aktuator nach einem der vorstehenden Ansprüche, **dadurch gekennzeichnet, dass** er ein Gehäuse (6) umfasst, das an dem Getriebe des Fahrzeugs befestigt werden kann und in dem der Elektromotor (2), das Zahnrad (3, 3'), die angetriebene Welle (40) und der Sensor (50) untergebracht sind, wobei das Gehäuse (6) außerdem einen elektrischen Stecker (60) umfasst, um den Elektromotor (2) und den Sensor (50) elektrisch mit einer Stromquelle zu verbinden.

8. Aktuator nach Anspruch 7, **dadurch gekennzeichnet, dass** der elektrische Steckverbinder (60) über in das Gehäuse (6) eingegossene Leiterbahnen mit dem Elektromotor (2) und dem Sensor (50) verbunden ist.

9. Aktuator nach Anspruch 7 oder 8, **dadurch gekennzeichnet, dass** der Elektromotor (2), die Abtriebswelle (40) und der Sensor (50) durch Befestigungsmittel (66, 67, 63, 64) in Form von Clips im Gehäuse (6) gehalten werden.

## Claims

1. Actuator (1, 1') for actuating at least one movable member of a vehicle transmission, said actuator (1, 1') comprising an electric motor (2) having a drive shaft (21) on which is mounted a first gear (22, 22'), a gear wheel (3, 3') having teeth (31, 31') meshing with the first pinion (22, 22') and a torque output element (33) capable of being coupled to the transmission, the gear wheel (3, 3') further comprising a worm gear mechanism (4, 4') meshing with a second pinion (41, 41') mounted on a driven shaft (40), said driven shaft (40) comprising a magnetic target (44) facing a sensor (50), **characterized in that** the first pinion (22, 22') and the teeth (31, 31') of the gear wheel (3, 3') form a face gear, also known as a crown gear or contrate gear.

2. Actuator according to claim 1, **characterized in that** the gear wheel (3, 3') comprises a first disc-shaped part with an inner face and an outer face, said teeth (31, 31') are formed at the periphery of the outer face, the gear wheel (3, 3') further comprises a second barrel-shaped part (32) extending from the outer face of the first part and on which the torque output element (33) is located, said first part and second part being monobloc.

3. Actuator according to claim 2, **characterized in that** the worm gear mechanism (4) is located on the second barrel-shaped part (32) of the gear wheel (3).

4. Actuator according to claim 2, **characterized in that** the worm gear mechanism (4') is located on the first disc-shaped part on the outer face of the gear wheel (3).

5. Actuator according to one of the preceding claims, **characterized in that** the target (44) is fixed to a first end of the driven shaft (40) by means of a target support (45), said driven shaft (40) being guided in rotation by a first bearing (42) surrounding the target support (45) and by a second bearing (43) surrounding the driven shaft (40) at a second end of the driven shaft (40).

6. Actuator according to claim 5, **characterized in that** the second gear (41) is located substantially in the middle of the driven shaft (40) between the first and second bearings (42, 43).

7. Actuator according to one of the preceding claims, **characterized in that** it comprises a housing (6) capable of being fixed to the vehicle's transmission and in which the electric motor (2), the gear wheel (3, 3'), the driven shaft (40) and the sensor (50), said housing (6) further comprises an electrical connector (60) for electrically connecting the electric motor (2) and the sensor (50) to an electrical source.

8. Actuator according to claim 7, **characterized in that** the electrical connector (60) is connected to the electric motor (2) and the sensor (50) via conductive tracks molded into the housing (6).

9. Actuator according to claim 7 or 8, **characterized in that** the electric motor (2), the driven shaft (40) and the sensor (50) are held in the housing (6) by fastening means (66, 67, 63, 64) in the form of clips.
